# FASCICULE DE BREVET EUROPEEN

(11) **EP 0 849 856 B1**
(45) Date de publication et mention de la délivrance du brevet: **24.08.2005**
(21) Numéro de dépôt: 97403056.1
(22) Date de dépôt: 16.12.1997
(51) Int. Cl.: H02J 7/16

(54) **Dispositif de régulation de la tension de charge d'une batterie de véhicule automobile par un alternateur**
Einrichtung zur Ladespannungssteuerung einer Kraftfahrzeugbatterie mitteles eines Drehstromgenerators
Device for controlling the charging voltage of an automobile battery by an alternator

(30) Priorité: 16.12.1996 FR 9615421
(43) Date de publication de la demande: 24.06.1998
(73) Titulaire: VALEO EQUIPEMENTS ELECTRIQUES MOTEUR, 94000 Créteil (FR)
(72) Inventeur: Pierret, Jean-Marie, 75012 Paris (FR); Rechdan, Raymond, 94410 Saint Maurice (FR)
(74) Mandataire: Le Forestier, Eric

(56) Documents cités:
- EP-A- 0 191 571
- EP-A- 0 519 805

## Description

La présente invention est relative à un dispositif de régulation de la tension de charge d'une batterie de véhicule automobile par un alternateur.

Plus particulièrement, l'invention concerne un dispositif de régulation qui comporte - outre un régulateur proprement dit, qui délivre des signaux d'excitation à l'inducteur de l'alternateur - une unité de gestion externe audit régulateur et à l'alternateur, qui pilote ledit régulateur.

EP 0 691 726 décrit un système de charge pour véhicule automobile adapté au cas d'un régulateur recevant des instructions de commande que lui transmet le calculateur de contrôle moteur du véhicule. Un tel système de charge est cependant peu réactif puisqu'il s'écoule un certain temps après le réveil du régulateur avant que celui-ci n'ait déterminé les informations de commande portées par le signal transmis par le calculateur et ne rentre ainsi en action.

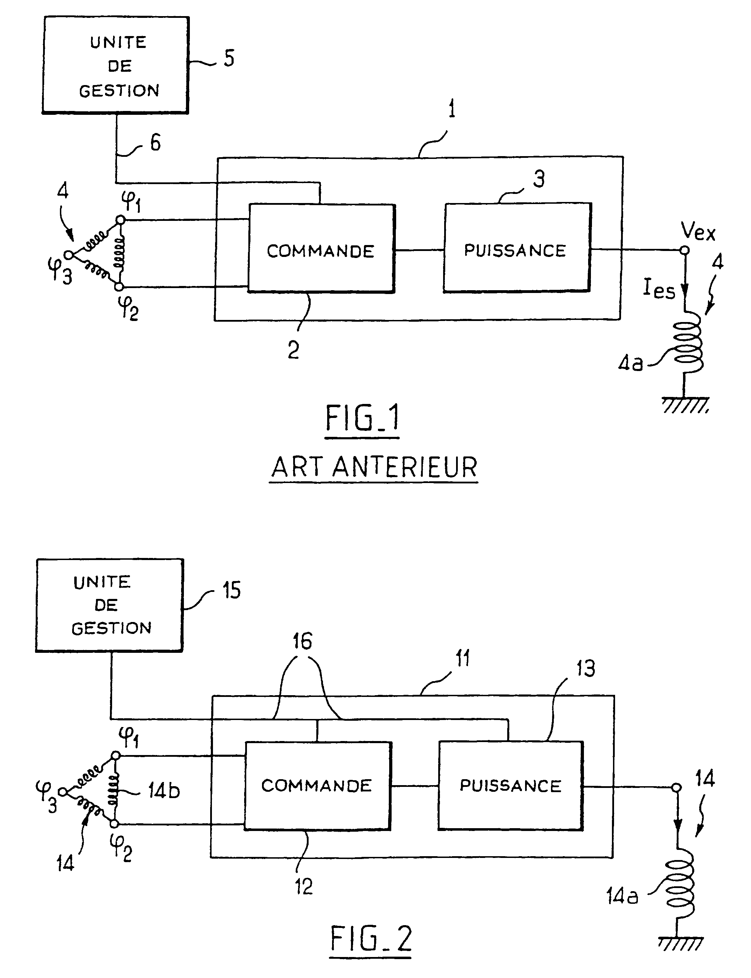

On pourrait également penser, pour réaliser un tel dispositif de régulation, à une structure du type de celle qui a été illustrée sur la figure 1.

Le régulateur 1 y est composé d'un circuit de commande 2 et d'un circuit de puissance 3, ce dernier amplifiant les signaux d'excitation délivrés par le circuit de commande 2. Les signaux d'excitation amplifiés sont appliqués à l'inducteur 4a de l'alternateur 4 (rotor) sous forme d'une tension Vex provoquant un courant d'excitation Ies dans ledit inducteur 4a.

Le circuit de commande 2 est relié, par l'intermédiaire d'une liaison filaire 6, à un calculateur 5 - par exemple celui du contrôle moteur - qui constitue l'unité de gestion externe du dispositif.

Avec un tel dispositif, la fonction de régulation est activée par le signal transmis au circuit de commande 2 par le calculateur 5 - via la liaison 6. Ce signal est par exemple un signal du type à impulsions à largeur modulée (Pulse Width Modulation ou PWM selon la terminologie anglo-saxonne généralement utilisée par l'Homme du Métier).

Le circuit de commande 2 est alors réveillé et transmet un signal de pré-excitation au circuit de puissance 3. L'alternateur 4 est par conséquent magnétisé, de sorte que la rotation de l'alternateur génère un signal phase (tension aux bornes d'un des bobinages).

Dès que le circuit de commande 2 a détecté ce signal phase, le signal de pré-excitation est transformé en signal d'excitation afin de réguler la tension batterie.

Toutefois, une telle structure n'est pas pleinement satisfaisante.

La liaison 6 peut être soumise à des perturbations électromagnétiques provoquées par des équipements internes ou externes au véhicule (radio-téléphone par exemple). De telles perturbations sont susceptibles de produire aux bornes de la liaison 6 des surtensions pouvant réveiller le circuit de commande 2 et, par voie de conséquence, provoquer un courant de pré-excitation déchargeant la batterie lorsque le véhicule est à l'arrêt. On notera en particulier que le courant de décharge peut alors être supérieur à 50 mA.

Un but de l'invention est de pallier cet inconvénient et de proposer un dispositif de régulation de ce type qui permette de réaliser l'amorçage du régulateur en mode normal et en mode dégradé et présente une bonne immunité contre les perturbations électromagnétiques.

La solution préconisée consiste à magnétiser le circuit de l'alternateur par un courant d'excitation fixé par le signal de pilotage délivré par l'unité de gestion externe, ce signal de pilotage contrôlant directement l'étage de puissance du régulateur lorsque l'alternateur est à l'arrêt.

Ainsi, l'invention propose un dispositif de régulation de la tension de charge d'une batterie de véhicule automobile par un alternateur, comportant d'une part un circuit de commande qui comprend des moyens pour commander l'excitation de l'inducteur de l'alternateur en fonction de la tension de charge, ainsi que des moyens pour détecter le début de la rotation de l'alternateur, et d'autre part un circuit de puissance qui comporte des moyens pour l'amplification des signaux d'excitation que lui transmet le circuit de commande, ledit dispositif de régulation comportant une unité de gestion externe reliée au circuit de commande pour lui transmettre différents paramètres de régulation, caractérisé en ce que le circuit de puissance est également relié à l'unité de gestion externe et comporte des moyens lui permettant de générer par lui-même un signal d'excitation lorsque l'unité de gestion délivre un signal de commande, le circuit de commande étant adapté à n'être réveillé pour émettre un signal d'excitation que lorsque le début de la rotation de l'alternateur est détecté.

Ce dispositif est avantageusement complété par les différentes caractéristiques suivantes prises seules ou selon toutes leurs combinaisons possibles :
- le circuit de puissance comporte des moyens logiques qui sont reliés au moyens de détection du début de la rotation de l'alternateur, ainsi qu'à l'unité de gestion externe, et qui ne génèrent, par l'intermédiaire des moyens d'amplification, un signal d'excitation que lorsque l'unité de gestion externe délivre un signal de commande et qu'aucun début de rotation de l'alternateur n'est détecté ;
- les moyens de détection du début de la rotation de l'alternateur comprennent un circuit de détection de l'apparition d'une tension entre deux phases de l'alternateur ;
- le circuit de détection de ce signal phase comporte un détecteur de signal, qui génère un signal de niveau haut lorsque la tension qui correspond à ce signal phase est supérieure à un seuil donné, un dispositif de temporisation qui reçoit le signal en sortie de ce détecteur et qui est remis à zéro lorsque ce signal est à son niveau haut, un inverseur logique dont l'entrée est reliée à la sortie du dispositif de temporisation, et dont la sortie est reliée à un calculateur présent dans le circuit de commande ;
- le circuit de puissance comporte un inverseur logique qui reçoit le signal émis par l'unité de gestion externe, ainsi qu'une porte logique NON-OU qui reçoit la sortie de cet inverseur logique, ainsi que celle de l'inverseur logique du circuit de détection ;
- le circuit de puissance comporte en outre une porte logique OU qui reçoit en entrée la sortie de ladite porte logique NON-OU, ainsi que le signal de commande d'excitation généré par le calculateur du circuit de commande ;
- le circuit de commande et le circuit de puissance comportent des moyens pour, à la demande de l'unité de gestion externe, réguler la tension entre deux phases de l'alternateur ;
- la porte logique OU reçoit également en entrée un signal généré par les moyens de régulation de la tension entre deux phases de l'alternateur ;
- le circuit de puissance comporte une deuxième porte logique NON-OU dont la sortie est envoyée en entrée de la porte logique OU et qui reçoit en entrée un signal en sortie du calculateur du circuit de détection, ainsi qu'un signal en sortie de moyens détectant le franchissement par les phases de l'alternateur d'un ou plusieurs seuil(s) de tension donné(s);
- ces moyens de détection de franchissement de seuil(s) comportent un détecteur de signal, qui génère un signal de niveau bas lorsque les tensions de phase prennent des valeurs crêtes en dessous d'un seuil donné, un dispositif de temporisation qui reçoit le signal en sortie de ce détecteur et qui est remis à zéro lorsque ce signal est à son niveau haut, un inverseur logique dont l'entrée est reliée à la sortie du dispositif de temporisation, et dont la sortie est transmise à la deuxième porte logique NON-OU.

D'autres caractéristiques et avantages de l'invention ressortiront encore de la description qui suit. Cette description est purement illustrative et non limitative. Elle doit être lue en regard des dessins annexés sur lesquels :
- la figure 1, déjà analysée, est une représentation schématique d'un dispositif de régulation comportant une unité de gestion externe ;
- la figure 2 est une représentation schématique d'un dispositif de régulation conforme à un mode de réalisation possible de l'invention ;
- la figure 3 est un schéma illustrant un montage possible pour un dispositif du type de celui de la figure 2 ;
- la figure 4 est un schéma illustrant un montage possible pour les détecteurs de signal de phase du dispositif de la figure 3.

Le dispositif de régulation illustré sur la figure 2 comporte un régulateur 11, qui est constitué d'une part par un circuit de commande 12 recevant un signal phase, qui correspond à une tension entre deux phases de l'induit 14b de l'alternateur 14 (entrées ϕ₁ et ϕ₂), et d'autre part par un circuit de puissance 13, qui délivre un courant d'excitation à l'inducteur 14a de l'alternateur 14.

Ce dispositif de régulation comporte également une unité de gestion 15, qui est reliée à la fois au circuit de commande 12 et au circuit de puissance 13 (liaisons filaires 16).

Contrairement au dispositif de régulation de la figure 1, le signal émis par l'unité 15 n'est pas utilisé pour réveiller le circuit de commande 12. Le circuit de puissance 13, qui est relié directement à l'unité de gestion 15, génère de lui-même à la réception du signal émis par l'unité de gestion 15 un signal d'excitation qui magnétise l'alternateur.

Le circuit de commande 12 est quant à lui réveillé par l'apparition du signal phase entre les entrées ϕ₁ et ϕ₂, c'est-à-dire lorsque l'alternateur 14 est en rotation - et donc capable de charger la batterie.

Ainsi, une perturbation transitant par les liaisons 16 ne peut activer le régulateur et provoquer une décharge de la batterie lorsque l'alternateur est à l'arrêt.

Tant que l'alternateur 14 ne tourne pas, le signal phase n'existe pas et le circuit de commande 12 ne peut être réveillé.

Une perturbation crée uniquement un léger courant d'excitation (inférieur à 1 mA) incapable de décharger la batterie de façon appréciable.

Dès que l'alternateur est en rotation et que le circuit de commande 12 est réveillé, le circuit de commande 12 émet un signal d'excitation qui est fonction de différents paramètres du signal émis par l'unité de gestion 15 (fréquence, amplitude, rapport cyclique...). Il peut avantageusement être prévu que pendant la phase d'accélération du moteur, ce signal est un signal de pré-excitation indépendant de la tension de charge, de façon à réduire le couple de l'alternateur pendant cette phase, la régulation normale de la tension de charge n'étant réalisée qu'à l'issue de cette phase de démarrage.

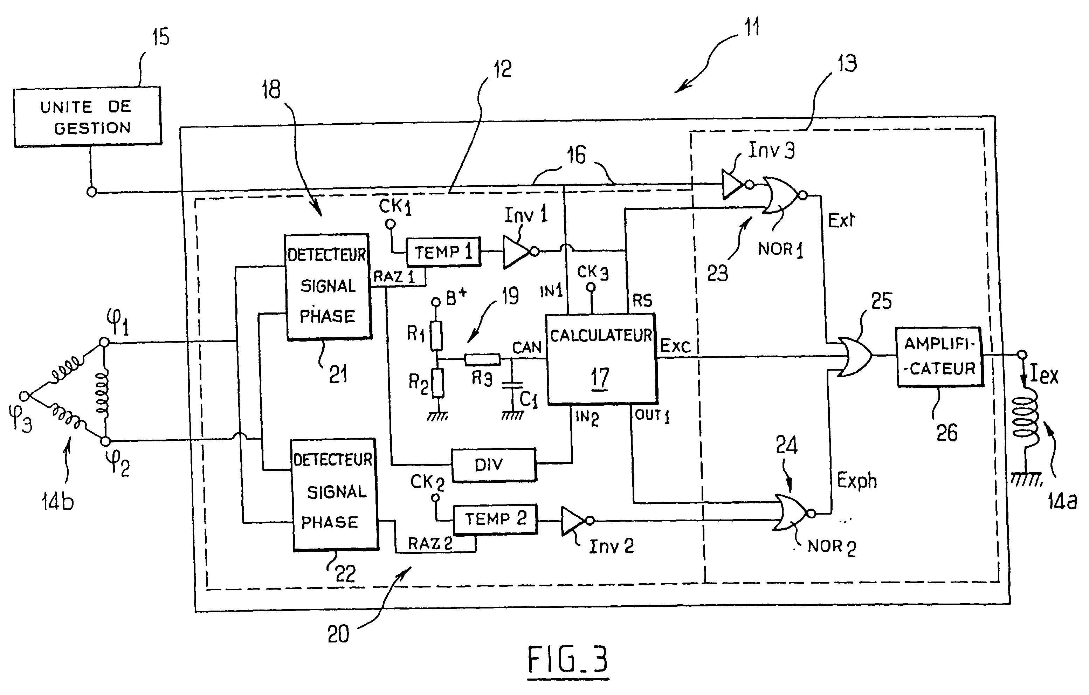

Ainsi qu'on l'a illustré sur la figure 3, dans un mode de réalisation possible, le circuit de commande 12 comporte un calculateur 17, un circuit 18 de détection du signal phase dont la sortie est reliée à une entrée RS du calculateur 17, un circuit de filtrage de tension 19 qui relie la tension de sortie de l'alternateur à une entrée CAN du calculateur 17 via une borne B⁺ d'alimentation, ainsi qu'un circuit 20 de régulation du signal phase.

Le calculateur 17 est relié par une entrée IN₁ à l'unité de gestion 15 par l'intermédiaire de la liaison 16.

Il reçoit également un signal d'horloge (entrée CK₃).

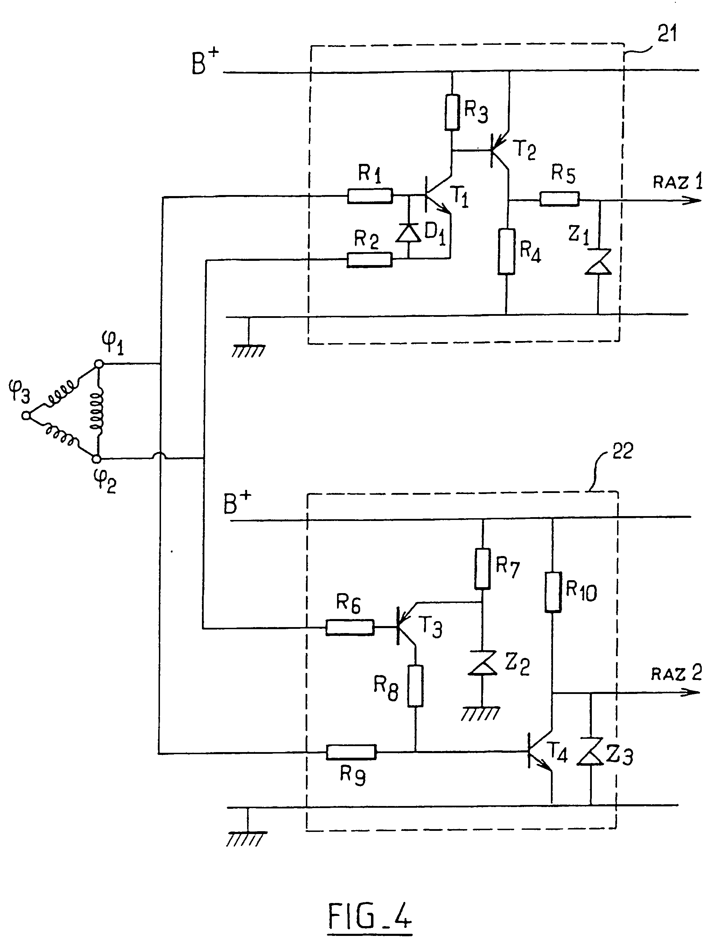

Le circuit 18 de détection du signal phase comporte un détecteur de signal 21, qui est décrit plus loin de façon détaillée en référence à la figure 4. Ce détecteur 21 reçoit en entrée la tension entre les entrées ϕ₁ et ϕ₂. Il génère un signal de niveau haut lorsque cette tension est supérieure à 0,6 Volts. Le signal RAZ₁ en sortie de ce détecteur 21 est envoyé sur un dispositif de temporisation TEMP₁ (entrée CK₁ de signal d'horloge) qui est monté en série avec un inverseur logique Inv1, dont la sortie est elle-même injectée sur l'entrée RS du calculateur 17.

Un diviseur de fréquence DIV est monté entre la sortie du détecteur de signal phase 21 et une entrée IN₂ du calculateur 17.

Le circuit de filtrage 19 est constitué d'un pont diviseur (résistances R₁, R₂ et R₃) et d'un condensateur C₁.

Le circuit 20 de régulation du signal phase est également constitué par un détecteur de signal phase 22 relié à un dispositif de temporisation TEMP₂ (entrée CK₂ de signal d'horloge) en série avec un inverseur logique Inv2. Le détecteur de phase 22 génère un signal RAZ₂, qui est de niveau haut lorsque la tension entre les entrées ϕ₁ et ϕ₂ est supérieure à 7 volts.

Le circuit de puissance 13 comporte quant à lui un circuit 23 pour la validation du signal émis par l'unité de gestion 15, un circuit 24 de validation de la régulation phase, un collecteur 25 des différents signaux d'excitation, ainsi qu'un amplificateur de puissance 26 qui fournit le courant d'excitation Iex à l'inducteur.

Le circuit 23 comporte un inverseur logique Inv3, qui reçoit le signal émis par l'unité de gestion 15, ainsi qu'une porte NON-OU (NOR₁), qui reçoit d'une part le signal en sortie de l'inverseur Inv3 et d'autre part le signal en sortie de l'inverseur Inv1.

Le circuit 24 de validation de la régulation phase comporte une porte NON-OU (NOR2), qui reçoit en entrée d'une part le signal en sortie de l'inverseur Inv2 et d'autre part un signal émis par le calculateur 17 au niveau d'une sortie OUT₁.

Le collecteur 25 est constitué par une porte logique OU qui reçoit les sorties des portes NOR₁ et NOR₂, ainsi que le signal d'excitation Exc généré par le calculateur 17.

Lorsque l'alternateur ne tourne pas, le détecteur phase 21 ne relance pas la temporisation TEMP₁ dont le niveau de sortie reste à 1. La sortie de l'inverseur Inv1 reste à zéro et le calculateur 17 n'est pas activé. Ainsi, lorsque l'unité de gestion 15 délivre un signal PWM, le calculateur 17 n'en tient pas compte. Par contre, ce signal PWM est reconstitué sur la sortie (Ext) de la porte NOR₁. En même temps, la sortie (Exc) du calculateur 17 reste à zéro car ce dernier n'est pas activé. Pour la même raison, la sortie OUT₁ est au niveau 1, ce qui force le niveau zéro à la sortie (Exph) de la porte NOR₂. Le seul signal d'excitation disponible pour l'amplificateur 26 est donc le signal PWM reconstitué sur la sortie (Ext) de la porte NOR₁. Par conséquent, lorsque l'alternateur ne tourne pas, le signal d'excitation correspond au seul signal PWM.

Lorsque l'alternateur entre en rotation, le détecteur de phase 21 détecte la présence d'un signal phase sur les entrées ϕ₁ et ϕ₂, et remet à zéro la temporisation TEMP₁. La sortie de l'inverseur Inv1 passe à 1, ainsi que l'entrée RS du calculateur 17 qui est alors réveillé. En même temps, la sortie de la porte NOR₁ passe à zéro. Ainsi, le calculateur 17 peut délivrer un signal d'excitation sur la sortie Exc pour contrôler le courant Iex dans l'inducteur, via l'amplificateur 26.

De plus, le calculateur 17 peut, en fonction du signal qu'il reçoit de l'unité de gestion 15, par exemple lorsque le rapport cyclique de celui-ci prend une valeur dans une fourchette donnée, autoriser une régulation phase à 7 Volts en mettant la sortie OUT₁ au niveau zéro. Si la tension entre ϕ₁ et ϕ₂ tombe en dessous de 7 Volts, le détecteur de phase 22 ne remet pas à zéro la temporisation TEMP₂ dont la sortie passe au niveau 1, ce qui met à zéro la sortie de l'inverseur Inv2. Si la sortie OUT₁ est aussi à zéro, la sortie de la porte NOR₁ délivre un signal d'excitation Exph au niveau 1, qui augmente le courant d'excitation Iex via la porte OR et l'amplificateur 26.

Le circuit DIV est un diviseur de fréquence qui permet au calculateur 17 d'utiliser plus facilement la fréquence du signal en tant que paramètre d'entrée. Cette possibilité est utilisée, par exemple, si le calculateur dispose d'une fonction charge progressive ou contrôle de vitesse, tels que décrits notamment dans le brevet FR 2 701 609.

On a illustré sur la figure 4 un montage possible pour les détecteurs de signal phase 21 et 22.

Dans ce montage, le détecteur 21 comporte un premier transistor bipolaire T₁ de type NPN dont la base est reliée à l'entrée ϕ₁ par l'intermédiaire d'une résistance R₁. L'émetteur de ce transistor T₁ est relié à l'entrée ϕ₂ par l'intermédiaire d'une résistance R₂. Une diode D₁ est montée entre l'émetteur et la base de ce transistor T₁. Cette diode D₁ est passante dudit émetteur vers ladite base.

Le collecteur du transistor T₁ est relié à la base d'un transistor T₂ de type PNP, dont l'émetteur est lui-même relié à une borne d'alimentation à la tension B⁺ en sortie de l'alternateur 14. La base de ce transistor T₂ est également reliée à ladite borne B⁺ par l'intermédiaire d'une résistance R₃.

Le collecteur du transistor T₂ est relié à la masse par une résistance R₄. Il est également relié à une résistance R₅ reliée à son autre extrémité à la cathode d'une diode Zéner Z₁. Le signal au point de jonction entre la diode Zéner Z₁ et la résistance R₅ est le signal RAZ₁, qui est injecté dans le temporisateur TEMP₁. La tension Zéner de ladite diode Z₁ est de 5 volts.

Lorsque l'alternateur est en rotation, la tension Vϕ₁ - Vϕ₂ entre les entrées ϕ₁ et ϕ₂ prend une valeur positive supérieure à 0,6 volt, les transistors T₁ et T₂ sont passants, de sorte que le signal RAZ₁ remet à zéro le temporisateur TEMP₁. Inversement, lorsque l'alternateur n'est pas en rotation, cette tension prend une valeur inférieure à 0,6 Volt, ces transistors T₁ et T₂ sont bloqués, de sorte que le détecteur 21 ne relance pas la temporisation.

Le montage du détecteur 22 comporte quant à lui un transistor T₃ de type PNP dont la base est reliée par une résistance R₆ à l'entrée ϕ₂. Son émetteur est relié à la borne B⁺ par l'intermédiaire d'une résistance R₇. Cet émetteur est également relié à la masse par l'intermédiaire d'une diode Zéner Z₂ qui est passante de la masse vers la borne B⁺ et dont la tension Zéner est de 8,5 volts. Son collecteur est quant à lui relié par une résistance R₈ à la base d'un transistor T₄, laquelle base est également reliée par une résistance R₉ à l'entrée ϕ₁. L'émetteur de ce transistor T₄ est relié à la masse. Son collecteur est relié à la borne B⁺ par l'intermédiaire d'une résistance R₁₀. Une diode Zéner Z₃ est montée entre la masse et son collecteur en étant passante de la masse vers ledit collecteur.

Le signal en sortie du collecteur de ce transistor T₄ est le signal RAZ₂ injecté dans le temporisateur TEMP₂.

Ainsi, lorsque l'alternateur est en rotation, ce montage assure que le signal alternatif de phase ϕ₂ franchit au niveau de ses crêtes une tension supérieure à un seuil donné, par exemple de 7 Volts. Cette condition permet d'assurer le bon fonctionnement d'un compte-tour électronique équipant le véhicule et branché sur cette sortie-phase, en particulier dans le cas de moteur diesel.

Plus précisément, lorsque la tension sur la borne ϕ₂ est supérieure à la tension de la diode Zéner Z₂ diminuée de la tension de jonction émetteur/base de T₃ (c'est-à-dire si elle est supérieure à la valeur de 7 volts citée à titre d'exemple), alors le transistor T₃ est bloqué. Si pendant ce temps la tension sur ϕ₁ est inférieure à la tension de jonction émetteur/base de T₄, (0,6 volt par exemple), alors celui-ci reste bloqué. La sortie RAZ₂ est donc à un niveau logique haut, ce qui signale au calculateur 17 que les crêtes franchissent le seuil de 7 Volts et de 0,6 Volt et que le compte-tour peut fonctionner normalement.

Si par contre l'une des deux conditions précitées n'est plus vérifiée, T₄ devient passant, de sorte que la sortie RAZ₂ passe au niveau logique bas, ce qui a pour effet, comme cela a été indiqué précédemment, d'accroître le courant dans l'enroulement d'excitation de l'alternateur de manière que les seuils de 7 Volts et 0,6 Volt soient à nouveau franchis rapidement.

## Revendications

1. Dispositif de régulation de la tension de charge d'une batterie de véhicule automobile par un alternateur, comportant d'une part un circuit de commande (12) qui comprend des moyens pour commander l'excitation de l'inducteur de l'alternateur en fonction de la tension de charge, ainsi que des moyens (18) pour détecter le début de la rotation de l'alternateur, et d'autre part un circuit de puissance (13) qui comporte des moyens pour l'amplification des signaux d'excitation que lui transmet le circuit de commande, ledit dispositif de régulation comportant une unité de gestion externe (15) reliée au circuit de commande (12) pour lui transmettre différents paramètres de régulation, **caractérisé en ce que** le circuit de puissance (13) est également relié à l'unité de gestion externe (15) et comporte des moyens lui permettant de générer par lui-même un signal d'excitation lorsque l'unité de gestion (15) délivre un signal de commande, le circuit de commande (12) étant adapté à n'être réveillé pour émettre un signal d'excitation que lorsque le début de la rotation de l'alternateur (14) est détecté.

2. Dispositif selon la revendication 1, **caractérisé en ce que** le circuit de puissance (13) comporte des moyens logiques (Inv3, NOR₁) qui sont reliés au moyens de détection du début de la rotation de l'alternateur, ainsi qu'à l'unité de gestion externe (15), et qui ne génèrent, par l'intermédiaire des moyens d'amplification, un signal d'excitation que lorsque l'unité de gestion externe (15) délivre un signal de commande et qu'aucun début de rotation de l'alternateur (14) n'est détecté.

3. Dispositif selon l'une des revendications 1 ou 2, **caractérisé en ce que** les moyens (18) de détection du début de la rotation de l'alternateur comprennent un circuit de détection de l'apparition d'une tension entre deux phases de l'alternateur.

4. Dispositif selon la revendication 3, **caractérisé en ce que** le circuit de détection de ce signal phase comporte un détecteur de signal (21), qui génère un signal de niveau haut lorsque la tension qui correspond à ce signal phase est supérieure à un seuil donné, un dispositif de temporisation (TEMP₁) qui reçoit le signal en sortie de ce détecteur et qui est remis à zéro lorsque ce signal est à son niveau haut, un inverseur logique (Inv1) dont l'entrée est reliée à la sortie du dispositif de temporisation, et dont la sortie est reliée à un calculateur présent dans le circuit de commande.

5. Dispositif selon les revendications 2 et 4 prises en combinaison, **caractérisé en ce que** le circuit de puissance (13) comporte un inverseur logique (Inv3) qui reçoit le signal émis par l'unité de gestion externe, ainsi qu'une porte logique NON-OU (NOR₁) qui reçoit la sortie de cet inverseur logique (Inv3), ainsi que celle de l'inverseur logique (Inv1) du circuit de détection.

6. Dispositif selon la revendication 5, **caractérisé en ce que** le circuit de puissance (13) comporte en outre une porte logique OU (25) qui reçoit en entrée la sortie de ladite porte logique NON-OU (NOR₁) ainsi que le signal de commande d'excitation généré par le calculateur (17) du circuit de commande.

7. Dispositif selon l'une des revendications 3 à 6, **caractérisé en ce que** le circuit de commande (12) et le circuit de puissance (13) comportent des moyens (20, NOR₂) pour, à la demande de l'unité de gestion externe, réguler la tension entre deux phases de l'alternateur.

8. Dispositif selon les revendications 6 et 7 prises en combinaison, **caractérisé en ce que** la porte logique OU (25) reçoit également en entrée un signal généré par les moyens de régulation (20, NOR₂) de la tension entre deux phases de l'alternateur.

9. Dispositif selon la revendication 8, **caractérisé en ce que** le circuit de puissance (13) comporte une deuxième porte logique NON-OU (NOR₂) dont la sortie est envoyée en entrée de la porte logique OU (25) et qui reçoit en entrée un signal en sortie du calculateur (17) du circuit de commande, ainsi qu'un signal en sortie de moyens (20) détectant le franchissement par les phases de l'alternateur d'un ou plusieurs seuil(s) de tension donné(s).

10. Dispositif selon la revendication 9, **caractérisé en ce que** ces moyens de détection de franchissement de seuils comportent un détecteur de signal (22), qui génère un signal de niveau bas lorsque les tensions de phase prennent des valeurs crêtes en dessous d'un seuil donné, un dispositif de temporisation (TEMP₂) qui reçoit le signal en sortie de ce détecteur et qui est remis à zéro lorsque ce signal est à son niveau haut, un inverseur logique (Inv2), dont l'entrée est reliée à la sortie du dispositif de temporisation, et dont la sortie est transmise à la deuxième porte logique NON-OU (NOR₂).

## Patentansprüche

1. Einrichtung zur Regelung der Ladespannung einer Kraftfahrzeugbatterie mittels eines Drehstromgenerators, umfassend einerseits eine Steuerschaltung (12) die Mittel, um die Erregung der Erregerwicklung des Drehstromgenerators in Abhängigkeit von der Ladespannung zu steuern, sowie Mittel (18) enthält, um den Beginn der Drehung des Drehstromgenerators zu erfassen, und andererseits eine Leistungsschaltung (13), die Mittel zur Verstärkung der Erregungssignale umfasst, welche die Steuerschaltung an sie überträgt, wobei die besagte Regelungseinrichtung eine externe Managementeinheit (15) umfasst, die mit der Steuerschaltung (12) verbunden ist, um verschiedene Regelungsparameter an sie zu übertragen, **dadurch gekennzeichnet, dass** die Leistungsschaltung (13) ebenfalls mit der externen Managementeinheit (15) verbunden ist und Mittel umfasst, die es ihr ermöglichen, selbst ein Erregungssignal zu erzeugen, wenn die Managementeinheit (15) ein Steuersignal liefert, wobei die Steuerschaltung (12) geeignet ist, nur dann aktiviert zu werden, um ein Erregungssignal auszugeben, wenn der Beginn der Drehung des Drehstromgenerators (14) erfasst wird.

2. Einrichtung nach Anspruch 1, **dadurch gekennzeichnet, dass** die Leistungsschaltung (13) Logikmittel (Inv₃, NOR₁) umfasst, die mit den Mitteln zur Erfassung des Beginns der Drehung des Drehstromgenerators sowie mit der externen Managementeinheit (15) verbunden sind und die über die Verstärkungsmittel nur dann ein Erregungssignal erzeugen, wenn die externe Managementeinheit (15) ein Steuersignal liefert und wenn kein Beginn der Drehung des Drehstromgenerators (14) erfasst wird.

3. Einrichtung nach einem der Ansprüche 1 oder 2, **dadurch gekennzeichnet, dass** die Mittel (18) zur Erfassung des Beginns der Drehung des Drehstromgenerators eine Erfassungsschaltung zum Erfassen des Auftretens einer Spannung zwischen zwei Phasen des Drehstromgenerators umfassen.

4. Einrichtung nach Anspruch 3, **dadurch gekennzeichnet, dass** die Erfassungsschaltung für dieses Phasensignal einen Signaldetektor (21) umfasst, der ein Hochpegelsignal erzeugt, wenn die Spannung, die diesem Phasensignal entspricht, größer als ein gegebener Schwellenwert ist, eine Zeitschaltvorrichtung (TEMP₁), die das Signal am Ausgang dieses Detektors erhält und die zurückgestellt wird, wenn sich dieses Signal auf seinem hohen Pegel befindet, einen logischen Inverter (Inv₁), dessen Eingang mit dem Ausgang der Zeitschaltvorrichtung verbunden ist und dessen Ausgang mit einem in der Steuerschaltung vorhandenen Rechner verbunden ist.

5. Einrichtung nach den Ansprüchen 2 und 4 in Kombination, **dadurch gekennzeichnet, dass** die Leistungsschaltung (13) einen logischen Inverter (Inv₃), der das durch die externe Managementeinheit ausgegebene Signal erhält, sowie ein logisches NICHT-ODER-Glied (NOR₁) umfasst, das den Ausgang dieses logischen Inverters (Inv₃) sowie den des logischen Inverters (Inv₁) der Erfassungsschaltung erhält.

6. Einrichtung nach Anspruch 5, **dadurch gekennzeichnet, dass** die Leistungsschaltung (13) außerdem ein logisches ODER-Glied (25) umfasst, das eingangsseitig den Ausgang des besagten logischen NICHT-ODER-Glieds (NOR₁) sowie das durch den Rechner (17) der Steuerschaltung erzeugte Erregungssteuerungssignal erhält.

7. Einrichtung nach einem der Ansprüche 3 bis 6, **dadurch gekennzeichnet, dass** die Steuerschaltung (12) und die Leistungsschaltung (13) Mittel (20, NOR₂) umfassen, um nach Anforderung durch die externe Managementeinheit die Spannung zwischen zwei Phasen des Drehstromgenerators zu regeln.

8. Einrichtung nach den Ansprüchen 6 und 7 in Kombination, **dadurch gekennzeichnet, dass** das logische ODER-Glied (25) ebenfalls eingangsseitig ein durch die Regelungsmittel (20, NOR₂) zur Regelung der Spannung zwischen zwei Phasen des Drehstromgenerators erzeugtes Signal erhält.

9. Einrichtung nach Anspruch 8, **dadurch gekennzeichnet, dass** die Leistungsschalung (13) ein zweites logisches NICHT-ODER-Glied (NOR₂) umfasst, dessen Ausgang an den Eingang des logischen ODER-Glieds (25) geleitet wird und das eingangsseitig ein Signal am Ausgang des Rechners (17) der Steuerschaltung sowie ein Signal am Ausgang von Mitteln (20) erhält, die das Überschreiten eines oder mehrerer gegebener Spannungsschwellenwert(e) durch die Phasen des Drehstromgenerators erfassen.

10. Einrichtung nach Anspruch 9, **dadurch gekennzeichnet, dass** diese Erfassungsmittel zum Erfassen des Überschreitens von Schwellenwerten einen Signaldetektor (22) umfassen, der ein Niedrigpegelsignal erzeugt, wenn die Phasenspannungen Spitzenwerte unterhalb eines gegebenen Schwellenwerts annehmen, eine Zeitschaltvorrichtung (TEMP₂), die das Signal am Ausgang dieses Detektors erhält und die zurückgestellt wird, wenn sich dieses Signal auf seinem hohen Pegel befindet, einen logischen Inverter (Inv₂), dessen Eingang mit dem Ausgang der Zeitschaltvorrichtung verbunden ist und dessen Ausgang an das zweite logische NICHT-ODER-Glied (NOR₂) übertragen wird.

## Claims

1. Device for regulating the charging voltage of an automobile battery by an alternator, comprising firstly a control circuit (12) which comprises means for controlling the excitation of the alternator inductor according to the charging voltage, as well as means (18) for detecting the start of rotation of the alternator, and secondly a power circuit (13) which comprises means for amplifying the excitation signals transmitted to it by the control circuit, the said regulation device comprising an external management unit (15) connected to the control circuit (12) in order to transmit various regulation parameters to it, **characterised in that** the power circuit (13) is also connected to the external management unit (15) and comprises means enabling it to generate an excitation signal by itself when the management unit (15) delivers a control signal, the control circuit (12) being adapted to be awakened in order to emit an excitation signal only when the start of rotation of the alternator (14) is detected.

2. Device according to claim 1, **characterised in that** the power circuit (13) comprises logic means (Inv3, NOR₁) which are connected to the means of detecting the start of rotation of the alternator, as well as to the external management unit (15), and which generate, by means of the amplification means, an excitation signal only when the external management unit (15) delivers a control signal and no start of rotation of the alternator (14) is detected.

3. Device according to one of claims 1 of 2, **characterised in that** the means (18) of detecting the start of rotation of the alternator comprise a circuit for detecting the appearance of a voltage between two phases of the alternator.

4. Device according to claim 3, **characterised in that** the circuit for detecting this phase signal comprises a signal detector (21) which generates a high-level signal when the voltage which corresponds to this phase signal is above a given threshold, a timing device (TEMP₁) which receives the signal output from this detector and which is reset to zero when this signal is at its high level, and a logic inverter (Inv1) whose input is connected to the output of the timing device and whose output is connected to a calculator present in the control circuit.

5. Device according to claims 2 and 4 taken in combination, **characterised in that** the power circuit (13) comprises a logic inverter (Inv3) which receives the signal emitted by the external management unit, as well as a logic NOR gate (NOR₁) which receives the output of this logic converter (Inv3), as well as that of the logic inverter (Inv1) of the detection circuit.

6. Device according to claim 5, **characterised in that** the power circuit (13) also comprises a logic OR gate (25) which receives as an input the output of the said logic NOR gate (NOR₁) as well as the excitation control signal generated by the calculator (17) of the control circuit.

7. Device according to one of claims 3 to 6, **characterised in that** the control circuit (12) and the power circuit (13) comprise means (20, NOR₂) for regulating, at the request of the external management unit, the voltage between two phases of the alternator.

8. Device according to claims 6 and 7 taken in combination, **characterised in that** the logic OR gate (25) also receives as an input a signal generated by the means (20, NOR₂) of regulating the voltage between two phases of the alternator.

9. Device according to claim 8, **characterised in that** the power circuit (13) comprises a second logic NOR gate (NOR₂) whose output is sent as an input to the logic OR gate (25) and which receives as an input an output signal from the calculator (17) of the control circuit, as well as a signal output from means (20) detecting the passing, by the phases of the alternator, of one or more given voltage thresholds.

10. Device according to claim 9, **characterised in that** these means of detecting the passing of thresholds comprise a signal detector (22) which generates a low-level signal when the phase voltages take peak values below a given threshold, a timing device (TEMP₂) which receives a signal output from this detector and which is reset to zero whether this signal is at its high level, and a logic inverter (Inv2) whose input is connected to the output of the timing device and whose output is transmitted to the second logic NOR gate (NOR₂).
